# EUROPÄISCHE PATENTANMELDUNG

(11) **EP 0 704 672 A2**
(43) Veröffentlichungstag der Anmeldung: **03.04.1996**
(21) Anmeldenummer: 95890163.9
(22) Anmeldetag: 15.09.1995
(51) Int. Cl.: G01B 17/06

(54) **Verfahren zum Erfassen der Gestalt von tafelförmigen Gegenständen**

(30) Priorität: 27.09.1994 AT 1838/94
(71) Anmelder: Lisec, Peter, A-3363 Amstetten-Hausmening (AT)
(72) Erfinder: Lisec, Peter, A-3363 Amstetten-Hausmening (AT)
(74) Vertreter: Hehenberger, Reinhard, Dipl.-Ing.

(57) **Zusammenfassung**

Bei dem Verfahren und der Vorrichtung zum Erfassen der Gestalt von tafelförmigen Gegenständen (1), insbesondere Isolierglasscheiben, ist wenigstens ein Sensor (3) vorgesehen, der den Rand (2) des Gegenstandes (1) abtastet und der einen Ultraschallsender und einen Empfänger aufweist.

Die Ultraschallwellen werden etwa im rechten Winkel zur Ebene des tafelförmigen Gegenstandes (1) gesendet werden, während sich der Sensor (3) mit einer Pendelbewegung entlang des Randes (2) des Gegenstandes (1) bewegt.

## Beschreibung

Die Erfindung betrifft ein Verfahren zum Erfassen der Gestalt von tafelförmigen Gegenständen, insbesondere Isolierglasscheiben, mit wenigstens einem Sensor, der den Rand des Gegenstandes abtastet, wobei der wenigstens eine Sensor Schallwellen, insbesondere Ultraschallwellen, aussendet, die am Rand des Gegenstandes von diesem reflektiert und anschließend wieder aufgenommen werden, und wobei die Laufzeit der Schallwellen vom Sender zum Empfänger gemessen wird.

Die Erfindung betrifft weiters eine Vorrichtung mit einer Stützeinrichtung für den tafelförmigen Gegenstand, insbesondere eine Isolierglasscheibe, mit wenigstens einem Sensor zum Erfassen der Gestalt des Gegenstandes, wobei der Sensor einen Schallsender, insbesondere einen Ultraschallsender, und einen Empfänger aufweist.

Das Erfassen der Größe, d.h. der Gestalt, z.B. einer Isolierglasscheibe, ist insbesondere bei von der Rechteckform abweichenden Formen, sogenannten Modellscheiben, erforderlich, um die Bewegung eines Werkzeuges längs des Randes dieser Modellscheiben steuern zu können. Dazu wird die Form bzw. die Außenkontur der Modellscheibe erfaßt und diese Daten werden entweder direkt von einem nachgesteuerten Antrieb für die Bewegung des Werkzeuges verwendet oder in einem Datenspeicher für eine spätere Verwendung oder Weiterverarbeitung zwischengespeichert.

Eine nach einem derartigen Verfahren arbeitende Vorrichtung ist aus der EP-A2 0 415 771 bekannt. Dabei werden die Schallwellen jedoch immer in jene Richtung ausgesendet, in der auch die Dimension des Gegenstandes erfaßt werden soll. Der Sensor der EP-A2 0 415 771, der seine Schallwellen im rechten Winkel zur Ebene eines "flachen" Gegenstandes aussendet, mißt daher die Dicke des Gegenstandes.

Aus der DE-OS 40 33 585 ist eine Vorrichtung bekannt, mit der die Form bzw. Außenkontur von Glasscheiben, z.B. Modellscheiben, erfaßt werden kann. Die dort beschriebene Vorrichtung weist jedoch den Nachteil auf, daß bei großen Dimensionen von Glastafeln zwei Zeilenkameras vorgesehen sein müssen, um die Kontur der Glasscheibe erfassen zu können, daß die Genauigkeit der Erfassung oft nicht zufriedenstellend ist und daß die Zeilenkameras gegenüber störenden Lichteinflüssen von außen empfindlich sind.

Aufgabe der Erfindung ist es, ein Verfahren und eine Vorrichtung zum Erfassen der Gestalt von tafelförmigen Gegenständen, insbesondere Glasscheiben oder Isolierglasscheiben, zur Verfügung zu stellen, das bzw. die sehr einfach und zuverlässig arbeitet.

Gelöst wird diese Aufgabe bei einem gattungsgemäßen Verfahren dadurch, daß die Schallwellen im Winkel, vorzugsweise etwa rechtwinkelig, zu jener Ebene des tafelförmigen Gegenstandes gesendet werden, in deren Erstreckung die Gestalt des Gegenstandes mit dem Sensor erfaßt werden soll, und daß bei einer Änderung der Laufzeit der Schallwellen durch ein Überfahren des Randes ein Geometriepunkt des Gegenstandes erfaßt wird.

Die gattungsgemäße Vorrichtung zum Lösen der gestellten Aufgabe ist erfindungsgemäß dadurch gekennzeichnet, daß der Sensor im Winkel zu jener Ebene des tafelförmigen Gegenstandes ausgerichtet ist, in deren Erstreckung die Gestalt des Gegenstandes mit dem Sensor erfaßt werden soll, und daß eine Steuerung zur pendelnden Bewegung des Sensors etwa quer zum Rand und gleichzeitig entlang des Randes vorgesehen ist.

Durch das Verwenden von Schallwellen, insbesondere Ultraschallwellen, zum Abtasten des Randes ist einerseits ein sehr maßgenaues Erfassen der Gestalt des tafelförmigen Gegenstandes möglich, was jedoch anderseits gegen störende Einflüsse von außen sehr unempfindlich ist.

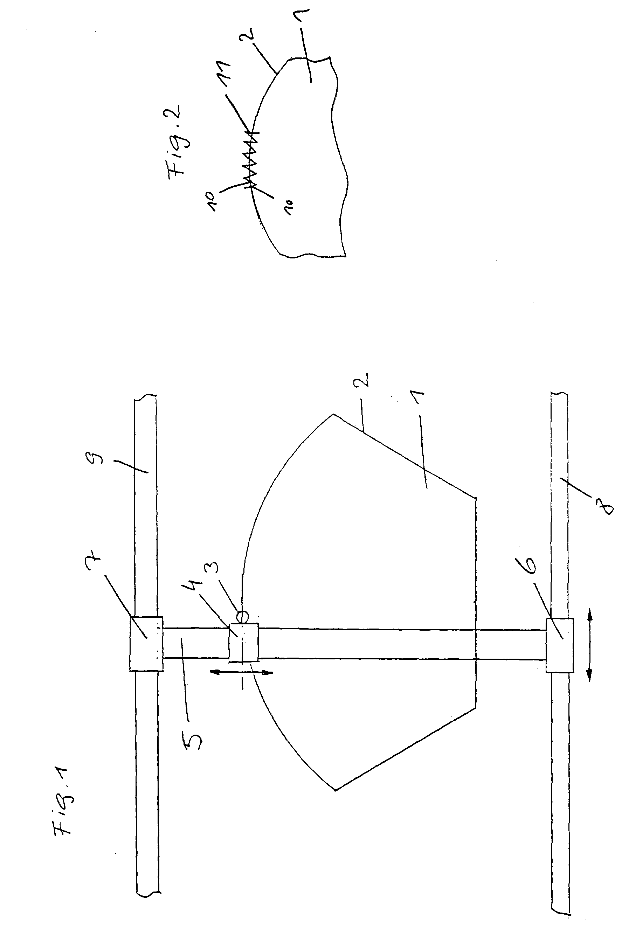

Weitere Merkmale und Vorteile der Erfindung ergeben sich aus den Unteransprüchen und der nachfolgenden Beschreibung von Ausführungsbeispielen der Erfindung. Es zeigt Fig. 1 eine Vorrichtung zum Erfassen der Gestalt einer Isolierglasscheibe, bei der die Schallwellen etwa im rechten Winkel zur Ebene des tafelförmigen Gegenstandes abgestrahlt werden und Fig. 2 den Verlauf der pendelnden Bewegung der Schallwellen entlang des Randes der Isolierglasscheibe bei der Vorrichtung von Fig. 1.

In Fig. 1 ist eine Ausführungsform der Erfindung schematisch dargestellt, bei der der Rand 2 eines tafelförmigen Gegenstandes 1, z.B. einer Glasscheibe oder einer Isolierglasscheibe, von einem Sensor 3 abgetastet wird. Der in Fig. 1 vereinfacht dargestellte Sensor 3 weist einen Sender zum Abstrahlen der Ultraschallwellen und einen Empfänger auf, welcher aufgrund der Charakteristik der reflektierten Schallwellen erkennt, ob diese von der Glasscheibe 1 oder von einem anderen Körper außerhalb bzw. hinter der Glasscheibe 1 zurückgeworfen werden. Der Sensor 3 erkennt dabei z.B. aufgrund der unterschiedlichen Laufzeiten der Schallwellen, ob diese von der Glasscheibe 1 oder einem anderen, weiter entfernten Gegenstand, z.B. der Stützeinrichtung, reflektiert werden. Derartige Sensoren sind an sich bekannt und werden daher nicht näher beschrieben.

Die Glasscheibe 1 kann auf an sich bekannte Weise auf einem waagrechten Tisch liegend oder an eine einige Grad aus der Lotrechten nach hinten geneigte Stützwand gelehnt herangefördert werden. Derartige Einrichtungen sind ebenfalls im Stand der Technik bekannt und werden deshalb nicht näher beschrieben.

Um gemäß einer anderen Ausführungsform der Erfindung Reflexionen von der Stützeinrichtung überhaupt zu vermeiden, kann vorgesehen sein, daß diese zumindest in den Bereichen, nach einer bestimmten Laufzeit, mit schallabsorbierendem Material bedeckt ist.

In Fig. 2 ist dargestellt, wie sich der Ultraschall, nach einer bestimmten Laufzeit, in denen eine Messung erfolgt, der etwa im rechten Winkel auf die Ebene der Glasscheibe 1 abgestrahlt wird, durch eine Pendelbewegung des Sensors 3 bzw. dessen Senders im Bereich des Randes 2 der Glasscheibe 1 hinund herbewegt, wobei seine Bewegungsbahn 11 dabei den Rand 2 an Punkten 10 immer wieder schneidet. Der Ultraschall wird dabei im Bereich des Randes 2 der Glasscheibe 1 von dieser nach einer bestimmten Laufzeit reflektiert, wogegen er außerhalb des Randes 2 entweder mit einer größeren Laufzeit oder z.B. durch das dort vorgesehene, schallabsorbierendes Material überhaupt nicht reflektiert wird.

Während der Pendelbewegung des Sensors 3 um den Rand 2 wird dieser durch einen Schlitten 4, der an einem Querbalken 5 verschiebbar gelagert ist, dem Rand 2 der Glasscheibe 1 nachgeführt. Der Querbalken 5 wiederum ist über Schlitten 6, 7 auf Führungen 8, 9 verschiebbar, so daß der gesamte Umfang 2 der Glasscheibe 1 vom Sensor 4 bestrichen werden kann.

Das Speichern der geometrischen Daten der Glasscheibe 1 erfolgt dabei punktweise immer dann, wenn entweder ein Übergang von Reflexion zu NichtReflexion bzw. umgekehrt oder eine plötzliche Änderung der Laufzeit der Schallwellen erfolgt. Gleichzeitig erfolgt kontinuierlich über die so ermittelten Daten das Nachführen des Sensors 3 entlang des beliebig gekrümmten Randes 2 der Glasscheibe 1. Die exakte Koordinatenlage jedes Meßpunktes 10 ergibt sich dabei aus der Koordinatenstellung des Sensors 3 sowie dem Neigungswinkel des Sensors 3 beim jeweiligen Meßpunkt 10.

Um eine besonders exakte Messung zu erzielen, kann die Pendelbewegung des Sensors 3 so gesteuert werden, daß die Bewegungsbahn 11 den Rand 2 immer etwa im rechten Winkel schneidet.

Dabei kann durch eine innerhalb gewisser, natürlicher Grenzen beliebige Einstellung des Verhältnisses von Vorschub des Sensors 3 entlang des Randes 2 der Glasscheibe 1 zur Pendelfrequenz des Sensors 3 der Abstand der Meßpunkte 10 am Rand 2 voneinander und entsprechend auch die Geschwindigkeit des Erfassens der geometrischen Daten einer ganzen Glasscheibe 1 verändert werden. Durch den Abstand der Meßpunkte 10 voneinander wird weiters die Genauigkeit des Erfassens der Geometrie der Glasscheibe 1 bestimmt.

Im Zusammenhang mit der vorstehenden Beschreibung von Ausführungsbeispielen wurde immer angegeben, daß der Sensor sowohl den Sender, als auch den Empfänger aufweist. Natürlich ist es im Rahmen der Erfindung auch möglich, den Sender und den Empfänger getrennt voneinander anzuordnen, beispielsweise wenn in Fig. 1 die Schallwellen nicht im wesentlichen rechtwinkelig zur Ebene der Glasscheibe 1, sondern in einem Winkel zwischen 0 und 90° abgestrahlt werden. Die Erfindung erstreckt sich ausdrücklich auch auf derartige Anordnungen.

Zusammenfassend kann die Erfindung beispielsweise wie folgt dargestellt werden:

Bei dem Verfahren und der Vorrichtung zum Erfassen der Gestalt von tafelförmigen Gegenständen, insbesondere Isolierglasscheiben, ist wenigstens ein Sensor vorgesehen, der den Rand des Gegenstandes abtastet und der einen Ultraschallsender und einen Empfänger aufweist.

Die Ultraschallwellen werden etwa im rechten Winkel zur Ebene des tafelförmigen Gegenstandes gesendet werden, während sich der Sensor mit einer Pendelbewegung entlang des Randes des Gegenstandes bewegt.

## Patentansprüche

1. Verfahren zum Erfassen der Gestalt von tafelförmigen Gegenständen, insbesondere Isolierglasscheiben, mit wenigstens einem Sensor, der den Rand des Gegenstandes abtastet, wobei der wenigstens eine Sensor Schallwellen, insbesondere Ultraschallwellen, aussendet, die am Rand des Gegenstandes von diesem reflektiert und anschließend wieder aufgenommen werden, und wobei die Laufzeit der Schallwellen vom Sender zum Empfänger gemessen wird, dadurch gekennzeichnet, daß die Schallwellen im Winkel, vorzugsweise etwa rechtwinkelig, zu jener Ebene des tafelförmigen Gegenstandes gesendet werden, in deren Erstreckung die Gestalt des Gegenstandes mit dem Sensor erfaßt werden soll, und daß bei einer Änderung der Laufzeit der Schallwellen durch ein Überfahren des Randes ein Geometriepunkt des Gegenstandes erfaßt wird.

2. Verfahren nach Anspruch 1, dadurch gekennzeichnet, daß die Schallwellen in einer pendelnden Bewegung etwa im rechten Winkel zum Rand abgestrahlt werden.

3. Verfahren nach Anspruch 2, dadurch gekennzeichnet, daß der Sensor entlang des Randes des Gegenstandes bewegt wird, während die Wellen quer zum Rand des Gegenstandes pendeln.

4. Verfahren nach einem der Ansprüche 1 bis 3, dadurch gekennzeichnet, daß die Laufzeit der Schallwellen vom Sender zum Empfänger gemessen wird, und daß bei einer Änderung der Laufzeit der Schallwellen durch ein Überfahren des Randes ein Geometriepunkt des Gegenstandes erfaßt wird.

5. Verfahren nach einem der Ansprüche 1 bis 3, dadurch gekennzeichnet, daß die Schallwellen außerhalb des Gegenstandes nicht reflektiert werden und daß bei einem Übergang von Reflexion zu Nicht-Reflexion der Schallwellen ein Geometriepunkt des Gegenstandes erfaßt wird.

6. Verfahren nach einem der Ansprüche 1 bis 5, dadurch gekennzeichnet, daß der Gegenstand während des Erfassens stillsteht und der wenigstens eine Sensor relativ zum Gegenstand bewegt wird.

7. Verfahren nach einem der Ansprüche 1 bis 6, dadurch gekennzeichnet, daß die erfaßten Geometriedaten zur weiteren Verarbeitung zwischengespeichert werden.

8. Vorrichtung, insbesondere zum Ausführen des Verfahrens nach einem der Ansprüche 1 bis 7, mit einer Stützeinrichtung für den tafelförmigen Gegenstand, insbesondere eine Isolierglasscheibe, mit wenigstens einem Sensor zum Erfassen der Gestalt des Gegenstandes, wobei der Sensor einen Schallsender, insbesondere einen Ultraschallsender, und einen Empfänger aufweist, dadurch gekennzeichnet, daß der Sensor (3) im Winkel zu jener Ebene des tafelförmigen Gegenstandes (1) ausgerichtet ist, in deren Erstreckung die Gestalt des Gegenstandes mit dem Sensor erfaßt werden soll, und daß eine Steuerung zur pendelnden Bewegung des Sensors (3) etwa quer zum Rand (2) und gleichzeitig entlang des Randes (2) vorgesehen ist.

9. Vorrichtung nach Anspruch 8, dadurch gekennzeichnet, daß der Sensor (3) an einem Schlitten (4) angeordnet ist, durch den er parallel zur Ebene des tafelförmigen Gegenstandes (1) bewegbar ist.

10. Vorrichtung nach Anspruch 8 oder 9, dadurch gekennzeichnet, daß ein Speicher vorgesehen ist, in dem die erfaßten Geometriedaten des Gegenstandes (1) gespeichert werden.
